# EUROPÄISCHE PATENTSCHRIFT

(11) **EP 1 854 828 B1**
(45) Veröffentlichungstag und Bekanntmachung des Hinweises auf die Patenterteilung: **05.11.2014**
(21) Anmeldenummer: 07108083.2
(22) Anmeldetag: 11.05.2007
(51) Int. Cl.: C08J 5/24, C08G 73/06, C08L 79/04

(54) **Flammfeste, niedrigtemperaturhärtende, cyanatbasierte Prepregharze für Honeycomb-Sandwichbauteile**
Flame-retardant prepreg resins based on cyanate and hardening at low temperatures for honeycomb sandwich components
Résines ignifuges durcissant à basse température à base de cyanates pour tissus impregnés et structures sandwich en nid d'abeilles

(30) Priorität: 12.05.2006 DE 102006022372
(43) Veröffentlichungstag der Anmeldung: 14.11.2007
(73) Patentinhaber: Fraunhofer-Gesellschaft zur Förderung der angewandten Forschung e.V., 80686 München (DE); Airbus Operations GmbH, 21129 Hamburg (DE)
(72) Erfinder: Bauer, Monika, 15754 Senzig (DE); Wurzel, Rajko, 14199 Berlin (DE); Uhlig, Christoph, 12487 Berlin (DE); Völkle, Dietmar, 88400, Biberach (DE); Müller, Volker, 88483, Burgrieden (DE); Hesse, Karsten, 28209, Bremen (DE); Michaelis, Wilfried, 27721, Ritterhude (DE)
(74) Vertreter: Olgemöller, Luitgard Maria

(56) Entgegenhaltungen:
- EP-A- 0 581 314
- EP-A- 0 927 737
- EP-A- 1 275 696
- JP-A- 2003 096 296
- JP-A- 2003 206 360

## Beschreibung

Die Erfindung betrifft imprägnierte textile Flächengebilde, sogenannte Prepregs, die sich für die Herstellung von Wabenkernverbund-(Honeycomb-)Sandwichbauteilen eignen. Insbesondere betrifft sie solche Prepregs, die mit Harzen aus Di- oder Polycyanaten, multifunktionellen aromatischen Alkoholen sowie geeigneten rheologischen Modifikatoren getränkt sind und sich als Decklagen (z.B. in Form von Glasgewebe-Prepregs) für im Crushed-Core-Verfahren hergestellte Flugzeug-Interior-Sandwichbauteile eignen sollen.

Für die Flugzeuginnenauskleidung werden überwiegend leichte Sandwichbauteile mit Honeycomb-Kernwerkstoffen eingesetzt. Die Bereiche, welche für den Passagier sichtbar sind, wie z.B. Fensterverkleidungen, sollen dabei vorzugsweise eine herausragende Oberflächenqualität aufweisen. Zugleich müssen diese Bauteile eine hohe Brandfestigkeit aufweisen. Zu den in der zivilen Luftfahrt (Innenausstattung) gestellten Anforderungen bzgl. des Brandverhaltens gehören eine geringe Brennbarkeit, eine geringe Wärmefreisetzungsrate, niedrige Rauchgasdichte sowie geringe Toxizität der gebildeten Brandgase.

Für diese Zwecke werden die Honeycomb-Kernwerkstoffe zumindest einseitig mit einem Harz in Form eines Halbzeugs, eines sog. Prepregs, beschichtet und verpresst. Das Prepreg ist ein mit einem für diesen Zweck eingestellten Harz getränktes textiles Flächengebilde, z.B. ein Gewebe, Gestricke oder Vlies aus einem geeigneten Fasermaterial wie Glas oder dgl..

Besonders wegen der oben genannten hohen Brandanforderungen sind bisher als Harze für diese Zwecke vorrangig Phenolharze eingesetzt worden. Phenolharze können jedoch die geforderten mechanischen Eigenschaften nicht bereitstellen; für Anwendungen, bei denen Schlagbelastungen auftreten (z.B. bei Kofferablagen), ist häufig ihre hohe Sprödigkeit problematisch. Außerdem ist die Polykondensation der Phenolharze bzw. sind die bei der Härtung freiwerdenden Gase möglicherweise auch die Ursache dafür, dass die Oberflächenqualität der heute hergestellten Sandwich-Bauteile (auf Basis von Phenolharzprepregs) nicht ausreichend ist, so dass diese Bauteile sehr arbeitsintensiv manuell (durch Spachteln und Schleifen) nachgearbeitet werden müssen. Dieser Prozess ist zeit- und kostenintensiv; daher ist man bestrebt, Prepregharze zu entwickeln, welche Sandwich-Bauteile liefern, die bereits nach dem sog. Crushed-Core-Verfahren exzellente Oberflächen aufweisen, so dass manuelle Nachbearbeitungsschritte entfallen können. Das Crushed-Core-Verfahren ist ein Verfahren, bei dem weitgehend ebene oder nur leicht gekrümmte Sandwich-Paneele mit stark gekrümmten (sich verjüngenden) Randbereichen dadurch hergestellt werden, dass die Honigwabe beim Verpressen (und Härten) mit den Prepreg-Decklagen in die vorgegebene Form gepresst und dabei deformiert sowie teilweise auch gestaucht wird, wobei die Festigkeit und Steifigkeit in diesen deformierten und partiell zerstörten Bereichen dabei jedoch nicht wesentlich abnimmt.

Je nach Einsatzzweck werden zusätzliche Eigenschaften wie gutes Impactverhalten, z.B. für Frachtraumanwendungen oder Kofferablagen gefordert.

Zudem bestehen bei der Herstellung von Sandwichbauteilen im Crushed-Core-Verfahren bezüglich der Lagerstabilität und der Handhabung der Prepregs Anforderungen an das Klebrigkeitsverhalten (den sog. Tack, bzw. die Reaktivierbarkeit des Tack), die durch Modifikationen (Formulierung) des Harzes gewährleistet werden müssen.

Um Prepregharze zu formulieren, welche Honeycomb-Sandwichbauteile mit sehr guten Oberflächen liefern, scheint die Verwendung von Additionsharzen aussichtsreicher als die von Kondensationsharzen, da hier während der Härtung keine Gase freigesetzt werden. Additionsharze mit guten mechanischen Eigenschaften sind Epoxidharze und Cyanatharze. Die heute kommerziell verfügbaren Epoxidharze sind jedoch für Flugzeug-Innenverkleidungen nicht ausreichend flammwidrig, weil sie eine erhöhte (unzulässige) Brandlast, speziell Rauchgasdichte aufweisen. Aus der Elektronik sind zwar halogenierte Epoxidharze mit hoher Flammwidrigkeit bekannt, der Einsatz von Halogenen führt jedoch im Brandfalle zur Entstehung von hochtoxischen und hochkorrosiven Gasen, was einen Einsatz nicht ermöglicht.

Cyanatharze weisen dagegen bereits durch ihre Netzwerkstruktur (infolge des hohen Stickstoff-Anteils) eine intrinsische Flammwidrigkeit auf. Sie kombinieren eine niedrige Wärmefreisetzungsrate mit einer geringen Rauchgasdichte und einem niedrigen Anteil toxischer Gase im Brandfall.

In der Literatur gibt es einige Vorschläge zur Herstellung von Prepreg-Material auf der Basis von Cyanatharzen. So ist im japanischen Abstract mit der Veröffentlichungs-Nr. 2002-194212 A eine härtbare Harzzusammensetzung für Laminate bzw. Prepregs hierfür offenbart, die einen Cyanatester, eine monofunktionelle Phenolkomponente, ein Polyphenylenetherharz, einen Flammverzögerer, der nicht mit dem Cyanatester reagieren kann, sowie einen metallhaltigen Reaktionskatalysator aufweist. Mit dem hitzebeständigen, formbaren Harz werden ein Prepreg und ein Laminat hergestellt. Das Prepreg eignet sich zur Herstellung mehrschichtiger gedruckter Schaltungen mit sehr guten Dielektrizitätseigenschaften. Das japanische Abstract mit der Veröffentlichungs-Nr. 2002-146185 schlägt ein ähnliches Harz für die gleiche Anwendung vor; hierfür wird jedoch anstelle des Polyphenylenetherharzes ein Polyethylenharz eingesetzt. Gemäß dem japanischen Abstract mit der Veröffentlichungs-Nr. 02-302446 wird ein Prepreg und eine daraus gefertigte Leiterplatte bereitgestellt, wobei die Komponenten für das Tränkharz ein polyaromatisches Cyanat, ein mehrwertiges Phenol, ein polyaromatisches Cyanat-Phenol, ein Katalysator und, bei Bedarf, ein Flammverzögerer sind. Ebenfalls für eine gedruckte Schaltung vorgesehen ist die Harzzusammensetzung, die in der EP 0889096 A2 offenbart ist und aus einem modifizierten Cyanatester, einer monofunktionellen Phenolkomponente, einem Polyphenylenetherharz sowie einem Flammschutzmittel erzeugt wird. Der Einsatz von multifunktionellen Phenolen wird in dieser Druckschrift als ungünstig bezeichnet, da die Hydroxygruppe auf einer Seite des Moleküls nicht abreagiere und im Makromolekül verbleibe, was die für diese Anwendung geforderten dielektrischen Eigenschaften verschlechtere.

In der EP 0295375 A2 findet sich der Vorschlag, Prepregs mit einer abziehbaren, mit Silicon beschichteten Folie zu versehen, um einen langanhaltenden Tack zu gewährleisten. Das Harz der Prepregs besteht aus einer cyanat-funktionalisierten Basis, die zusätzliche Bestandteile wie Epoxy- oder Maleimidharze enthält.

Im japanischen Abstract 03243634 A ist ein Harz offenbart, das aus 2-30 Gew.-% des Reaktionsprodukts von Neopentylglycol und Terephthalsäurechlorid, also einem Oligoester, mit einem durchschnittlichen Molekulargewicht von 200-2000 und Hydroxygruppen an beiden Enden, sowie 98-70 Gew.-% eines Harzes aus einer Cyanatester-Komponente und einer Bismaleimid-Komponente besteht. Mit diesem Harz werden entsprechende organische oder anorganische Fasern imprägniert.

JP 2003 206360A und JP 2003096296A betreffen Harze zum Einsatz in Prepregs, die sich für die Herstellung von gedruckten Schaltungen eignen. Alle konkret offenbarten Harze weisen einen Epoxy-Gehalt auf; im Übrigen können sowohl Dicyanate als auch Di- oder Polyphenole eingesetzt werden.

Der Einfluss multifunktioneller Phenole auf die Vernetzung von Cyanatharzen wurde bereits früher an einem Modellsystem unter theoretischen, insbesondere kinetischen Gesichtspunkten untersucht.

In EP 0581314 A2 werden härtbare Cyanatharze mit darin enthaltenen thermoplastischen Polymer-Modifikatoren vorgeschlagen, die während des Härtens einer Phasenseparation unterliegen, so dass sich ein in Mikrophasen separiertes Multiphasen-Duromer bildet. Die für die Herstellung des Harzes eingesetzten Cyanat-Verbindungen sind zumindest teilweise fluoriert und weisen eine niedrige Dielektrizitätskonstante auf. Die Harze werden zur Herstellung von gedruckten Schaltungen verwendet.

EP 12775696 A1 ist ebenfalls auf die Herstellung von Harzzusammensetzungen mit guten dielektrischen Eigenschaften gerichtet, die man für die Herstellung von Prepregs, insbesondere für gedruckte Schaltungen, verwenden kann. Hierfür sollen nach der Lehre dieser Druckschrift Dicyanate mit Monophenolen umgesetzt werden; Bisphenole ließen sich dagegen nicht vorteilhaft einsetzen, weil dann eine zu starke Verdickung eintreten solle.

Aufgabe der vorliegenden Erfindung ist es, Prepregs bereitzustellen, die zur Herstellung von vor allem in der zivilen Luftfahrt einsetzbaren Honeycomb-Leichtbauteilen sowie monolithischen Bauteilen (z.B. Klimarohren) geeignet sind und deshalb gleichzeitig die folgenden Eigenschaften aufweisen sollen:
- eine Verarbeitbarkeit/Verpressbarkeit im Bereich von 130-170°C über einen Zeitraum von insbesondere ca. 700-900s,
- eine gute Lagerstabilität
- eine gute Anbindung der Prepregs an den Kernwerkstoff nach dem Verpressen, vorzugsweise gemäß dem deutschen Standard DIN EN 2243 (Trommelschälversuch für Wabenkernverbunde),
- eine hohe Brandfestigkeit der verpressten Materialien mit geringer Wärmefreisetzungsrate, niedriger Rauchgasdichte sowie geringer Toxizität der gebildeten Brandgase, vorzugsweise gemäß dem Internationalen Standard ISO TC92/SC1 oder der Airbus Directive ABD0031.

In besonders bevorzugten Ausgestaltungen der Erfindung sollen die Prepregs weiterhin den folgenden Anforderungen genügen:
- beim Verpressen der Prepregs mit den Kernwerkstoffen sollen sich Oberflächen in einer Qualität bilden, die ein mechanisches Nachbearbeiten unnötig macht,
- das Harz der Prepregs sollte eine bleibende oder mit Hilfe eines Lösungsmittels wiederherstellbare Klebrigkeit besitzen, um deren verrutschfreies Auflegen auf den Kernwerkstoff zu gewährleisten.
- der Verbundwerkstoff sollte ein gutes Impactverhalten aufweisen.

Die Lösung der gestellten Aufgabe stößt auf Schwierigkeiten. Denn besonders flammwidrige Cyanatharze auf Basis von Phenol-Novolaken, z.B. PT-Harze der Fa. Lonza, haben nach vollständiger Aushärtung sehr hohe Glastemperaturen. Um einen vollständigen Umsatz an Cyanatgruppen zu erreichen, ist es daher erforderlich, hohe Härtungstemperaturen anzuwenden. Es ist zwar auch möglich, bei tieferen Temperaturen zu härten, denn die Reaktion kann z.B. durch Verwendung herkömmlicher Katalysatoren wie z.B. Metall-Acetylacetonat-Komplexe beschleunigt werden. Allerdings wird durch den Einsatz derartiger Katalysatoren die maximale Glastemperatur nicht herabgesetzt, und es wird nur die erste Phase der Härtungsreaktion beschleunigt; bei Härtungstemperaturen weit unterhalb der Härtungstemperatur, die für den maximalen Umsatz an OCN-Gruppen erforderlich ist, friert die Reaktion bei einem bestimmten OCN-Umsatz (der von der Härtungstemperatur bzw. deren Abstand von der maximalen Glasübergangstemperatur (d.h der Glasübergangstemperatur bei maximalem OCN-Umsatz) abhängig ist) ein. Unterhalb eines bestimmten Umsatzes verspröden Cyanatnetzwerke außerordentlich.

Deshalb könnte nach anderen Katalysatoren gesucht werden, die zugleich Netzwerkmodifikatoren darstellen, die das Netzwerk aufweiten und zugleich die Vernetzungsreaktion der Cyanatharze (Trimerisierung) katalysieren. Durch eine Netzwerkaufweitung würde die Glastemperatur herabgesetzt, so dass Härtungstemperaturen gewählt werden können, die niedriger als die für reine Cyanatester-Harze benötigten liegen, und damit vermieden werden kann, dass die oben beschriebene Versprödung durch zu geringen Umsatz an OCN-Gruppen auftritt.

Diese Suche ist jedoch problematisch. Der in der Literatur beschriebene Zusatz von monofunktionellen Phenolen erscheint beispielsweise nicht vielversprechend. Monofunktionelle Phenole wie im Stand der Technik eingesetzt werden bei der Reaktion verbraucht. Der zugrundeliegende Mechanismus ist sehr komplex. Die Erfinder der vorliegenden Anmeldung haben nämlich festgestellt, dass die Zahl der OH-Gruppen trotz des Einbaus der Phenole konstant bleibt. Der Grund ist der folgende: Für jede einreagierte OH-Gruppe wird an einer anderen Stelle eine OH-Gruppe freigesetzt. Der Effekt des monofunktionellen Phenols ist daher der, dass aus einer trifunktionellen Vernetzungsstelle eine difunktionelle Verknüpfung wird, weil die OH-Gruppe ein Netzkettenende bildet. Dadurch wird durch Monophenole die Netzwerkdichte sehr stark reduziert. Sie eignen sich daher nicht für die Zwecke der vorliegenden Erfindung, weil sie die Glastemperaturen deutlich über das wünschenswerte Maß hinaus herabsetzen und man im Harz einen unerwünscht hohen Solgehalt findet. Ein weiterer Nachteil liegt darin, dass Komponenten mit relativ hoher Flüchtigkeit im Harz verbleiben, die zu späterem Ausgasen führen, was zu verhindern ist, da daraus beispielsweise ungenügende Oberflächenqualitäten der Sandwichpanels resultieren können. Außerdem sind die Ausgangskomponenten flüchtig, was Verarbeitungs- (und ggf. auch Gefahrstoff)-Probleme mit sich bringt.

Aufgrund der Anwesenheit von Hydroxygruppen wäre außerdem damit zu rechnen, dass die Reaktion zumindest innerhalb längerer Zeitspannen, wie sie bei einer längeren Lagerung auftreten, nicht wie erforderlich vor Erreichen des Gelpunkts zum Stillstand kommt, sondern bis zu einem Vernetzungsgrad abläuft, der weit über dem Gelpunkt und damit der Verarbeitbarkeit (der homogenen Aufschmelzbarkeit) der Harze liegt.

Ein gute Lagerstabilität ist jedoch unbedingt erforderlich, weil die einzelnen Stufen der Herstellung der Prepregs, so die Herstellung der Harze selbst sowie das Tränken der textilen Flächengebilde damit, häufig in keinem zeitlichen Zusammenhang mit der Herstellung der damit beschichteten Bauteile stehen.

Um eine gute Anbindung der Prepregs an den Kernwerkstoff zu gewährleisten, werden zusätzlich einerseits rheologische Modifikatoren benötigt; andererseits muss das Material nach dem Härten eine sehr gute (hohe) Zähigkeit aufweisen. Diese Modifikatoren des Cyanatharzes dürfen zugleich nicht die sehr guten Brandeigenschaften (niedrige Wärmefreisetzungsrate, niedrige Rauchgasdichte, den geforderten niedrigen Gehalt an toxischen Gasen im Brandfall) negativ beeinflussen. Epoxide als Co-Monomere sind zum Beispiel nicht geeignet, da durch die Modifikation von Cyanatharzen wie PT-Harzen mit Epoxiden sowohl die Wärmefreisetzungsrate als auch die Rauchgasdichte erheblich gesteigert wird.

Weiterhin sollten die rheologische Modifikatoren im Zusammenspiel mit den Eigenschaften der sonstigen Bestandteile vorzugsweise die Fließeigenschaften der Harze bei der Heißhärtung in der Presse so beeinflussen, dass sich exzellente Bauteiloberflächen ergeben, und die Modifikatoren sollten nach Möglichkeit das ImpactVerhalten des schließlich erhaltenen Verbundwerkstoffs verbessern, zumindest jedoch nicht verschlechtern.

Überraschenderweise kann mit dem Prepreg gemäß Anspruch 1 erfindungsgemäß ein sogenanntes Halbzeug oder ein Prepreg bereitgestellt werden, das alle obigen Bedingungen erfüllt. Das Prepreg besteht aus einem textilen Flächengebilde, zum Beispiel aus Glas- oder anderen Fasern, das mit einer Mischung aus mindestens den folgenden Bestandteilen imprägniert ist:
einem Harz oder Prepolymer, hergestellt unter Verwendung mindestens eines di- oder polyfunktionellen Cyanats und mindestens eines di- oder polyfunktionellen aromatischen Alkohols in Mengenanteilen, die ein molares Verhältnis der OCN-Gruppen zu OH-Gruppen in den Ausgangsmaterialien zur Herstellung des Prepolymeren oder Harzes zwischen 95:5 und 70:30 gewährleisten, und
mindestens einem Füllstoff,
und ist frei von Epoxidharz.

Unter "Prepolymer", "Harz" und "prepolymerisiertem Harz" soll erfindungsgemäß gleichermaßen ein bis unterhalb des Gelpunktes vernetztes Additionspolymer aus den oder unter Verwendung der jeweils genannten Ausgangssubstanzen verstanden werden.

Die vorliegende Erfindung stellt damit mit multifunktionellen aromatischen Alkoholen modifizierte Cyanatharze als Imprägnierung für textile Flächengebilde bereit, die sich als sogenannte Prepregs für die Herstellung von Sandwichbauteilen eignen, welche insbesondere als Decklagen (in Form von Glasgewebe-, -gestricke-, -vlies-Prepregs) für im Crushed-Core-Verfahren hergestellte Flugzeug-Interior-Sandwichbauteile dienen sollen.

Die Modifizierungen des Cyanatharzes (d.h. die Formulierungen) beeinflussen die hohe Flammwidrigkeit der Harze nicht oder nur geringfügig, d.h. die niedrige Wärmefreisetzungsrate und niedrige Rauchgasdichte wird bewahrt. Der Anteil toxischer Gase wird dabei auch nicht erhöht. Zugleich macht es die Modifizierung von Cyanatharzen mit den genannten multifunktionellen aromatischen Alkoholen und dem oder den Füllstoffen möglich, Sandwichbauteile bei den heute im Crushed-Core-Verfahren verwendeten Härtungstemperaturen und -zeiten (vorwiegend 160°C/800s) zu härten, und es entstehen dabei Honeycomb-Sandwich-Bauteile mit exzellenten Oberflächen, die keine Nachbehandlung mehr erfordern.

Als überraschend kann hervorgehoben werden, dass Latenz erreicht wird, obwohl mit den aromatischen Alkoholen, wie oben definiert, Verbindungen eingesetzt werden, deren katalytische Wirkung eine Weiterreaktion der Harze erwarten ließe. Diese Latenz ermöglicht die Fertigung, den Transport und die Lagerung der Prepregs in den dafür heute üblichen Zeiträumen.

In bevorzugten Ausgestaltungen wird eine Kombination von Füllstoffen eingesetzt, mit deren Hilfe hervorragende Oberflächen erhalten und eine gute Anbindung an die Wabe erreicht werden kann. Darüber hinaus kann je nach Bedarf ein hoher Tack eingestellt werden oder dieser Tack durch Besprühen mit einem geeigneten Lösungsmittel, z.B. Isopropanol, auch nach langen Lagerzeiten reaktiviert werden, wie es häufig für die Herstellung von Prepregs gewünscht wird.

Durch die Modifikation der Cyanate mit multivalenten Phenolen, wie oben definiert, wird die Härtung bei moderaten Temperaturen (z.B. 130 oder 160°C) möglich, ohne dass dabei die intrinsische Flammwidrigkeit der reinen Cyanate negativ beeinflusst wird (dies ist bei der bekannten Modifikation der Cyanate mit Epoxiden nicht der Fall, hier wird die Flammwidrigkeit deutlich herabgesetzt).

Gegebenenfalls kann die Reaktivität auch durch Beigabe bekannter Katalysatoren, z.B. eines Metallacetylacetonats, verändert (weiter erhöht) werden, wie es aus dem Stand der Technik bekannt ist.

Die Modifikation mit organisch beschichteten Füllstoffen (sog. Core-Shell-Partikeln) erhöht die Trommelschälfestigkeit (d.h. verbessert die Anbindung zur Wabe) weiter, ohne dass dabei die intrinsische Flammwidrigkeit der Cyanate stark beeinträchtigt wird.

Überraschend ist vor allem das Erreichen einer Kombination der oben geforderten Eigenschaften, die von Haus aus größtenteils gegenläufig sind, mit einer einzigen Formulierung.

Die für das Harz einzusetzenden multifunktionellen Cyanate werden ausgewählt unter den di- oder polyfunktionellen Cyanaten der nachfolgend aufgeführten Strukturen I-III: 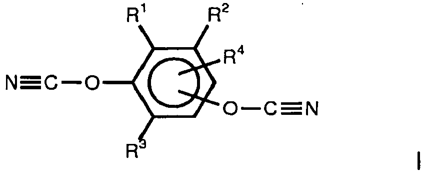 worin R¹ bis R⁴ unabhängig voneinander Wasserstoff, C₁-C₁₀-Alkyl, C₃-C₈-Cycloalkyl, C₁-C₁₀-Alkoxy, Phenyl oder Phenoxy ist, Beispiele sind Phenylen-1,3-dicyanat, Phenylen-1,4-dicyanat, ; 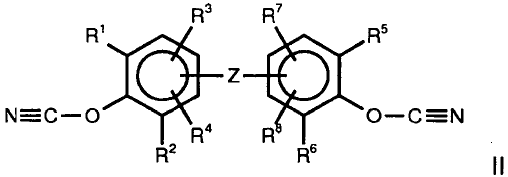 worin R⁵ bis R⁸ wie R¹ bis R⁴ sind und Z eine chemische Bindung, SO₂, CH₂, CH(CH₃), Isopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂oder 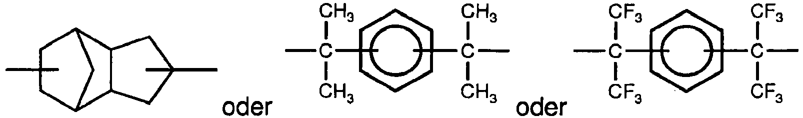 ist.

Beispiele sind 2,2-Bis(4-cyanato-phenyl)propan, Biphenylen-4,4'-dicyanat; 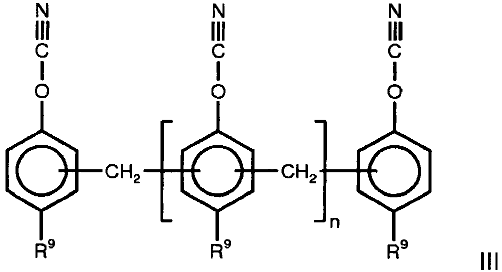 worin R⁹ Wasserstoff oder C₁-C₁₀-Alkyl ist und n eine ganze Zahl von 0 bis 20 bedeutet.

Die genannten Cyanate können als Monomere oder als Prepolymere, allein oder in Mischungen untereinander oder im Gemisch mit weiteren di- oder polyfunktionellen Cyanaten eingesetzt werden.

Als Beispiele für gut geeignete Cyanate seien das Dicyanat von Bisphenol A (4,4'-Dimethylmethylen-diphenyldicyanat), 4,4'Ethylidendiphenyldicyanat oder Verbindungen mit der Formel III genannt, worin n 1, 2 oder 3 ist, R⁹ Wasserstoff ist und die Methylengruppe jeweils in ortho-Position zur Cyanatgruppe steht.

Die einzusetzenden multifunktionellen (multivalenten) aromatischen Alkohole sind Verbindungen der oben für Cyanate angegebenen Strukturen I bis III, in denen die Cyanatgruppen durch Hydroxygruppen ersetzt sind. Selbstverständlich können auch Mischungen von Alkoholen wie oben definiert eingesetzt werden.

Vorzugsweise handelt es sich bei den multivalenten aromatischen Alkoholen um multivalente Phenole. Stattdessen können aber auch z.B. kondensierte Aromaten eingesetzt werden wie z.B. Naphtholderivate. Besonders bevorzugt handelt es sich bei den multivalenten Phenolen oder sonstigen Aromaten um divalente (difunktionelle) Alkohole. Die Hydroxygruppe ist jeweils direkt an den aromatischen Ring gebunden.

Als Beispiele für gut geeignete Bisphenole seien Bisphenol A, 4,4'Ethylidendiphenol oder Bishydroxyphenylsulfid genannt.

Das Material des oder der Füllstoffe wird nach den Kriterien der gewünschten Produkteigenschaften in geeigneter Weise gewählt.Beispielsweise können Füllstoffe wie z.B. Mikrofiller verwendet werden, wie sie als Verstärkungsmaterialien in Duromeren eingesetzt werden, also Füllstoffe mit einer Korngrößenverteilung, deren Schwerpunkt im µm-Bereich liegt. Aber auch Nanofiller mit kleineren Korngrößen (Korngrößenverteilung mit Schwerpunkt unterhalb des µm-Bereichs) sind möglich, z.B. Aerosile mit mittleren Teilchengrößen kleiner 100nm. Unabhängig davon, ob Mikrofiller und/oder Nanofiller eingesetzt werden, werden diese vorzugsweise ausgewählt unter anorganischen Füllstoffen, die gegebenenfalls organisch modifiziert und/oder beschichtet sein können. Sofern die Füllstoffe phosphororganische Bestandteile enthalten, verstärken sie die Brandsicherheit. Geeignete Materialien sind beispielsweise Siliciumdioxid, keramische Materialien, organisch modifizierte Silikone oder Siloxane oder Mischungen hiervon, insbesondere solche mit sehr hohen Oberflächen und/oder kleinen Korngrößen, wie z.B. Aerosil® von Degussa, phosphororganische Verbindungen wie EXOLIT OP 930 von Clariant, gegebenenfalls organophil modifizierter Bentonit wie Nanofil 2 der Südchemie oder mit einer organischen Beschichtung (z.B. einem Acrylat) beschichtete anorganische Teilchen oder solche aus einer organisch-anorganischen Matrix, z.B. aus einem Heteroorganopolysiloxan (sog. Core-Shell-Partikel). Letztere können beispielsweise so aufgebaut sein, dass sie einen weichen (elastomeren) Kern und eine harte (Polymer)-Schale aufweisen. Solche Partikel können z.B. u.a. bruchzähmodifizierende Eigenschaften aufweisen.

Es hat sich herausgestellt, dass insbesondere dann, wenn Siliciumdioxid und/oder Silikate mit sehr großen Oberflächen als Füllstoffe eingesetzt werden, Honeycomb-Sandwich-Bauteile mit exzellenten Oberflächen erhalten werde können, die keine Nachbehandlung mehr erfordern. Als hierfür geeignete Siliciumdioxid-Materialien sind pyrogene/hochdisperse Kieselsäuren wie Aeorosile zu nennen. Als Silikate eignen sich Schichtsilikate wie Montmorillonit, z.B. Nanofil, der ggf. organisch modifiziert sein kann. Hervorragende Produkte erhält man mit einer Kombination aus beiden Materialien.

Die Füllstoffe können allein oder in Mischung eingesetzt werden. Als sehr gut geeignet haben sich Mischungen verschiedener Füllstoffe aus unterschiedlichen Materialien erwiesen. Ihr Anteil im Harz kann vorzugsweise bis zu 20 Masse-% betragen.

Fakultativ können dem Ausgangsmaterial für die Harze weitere Zusätze beigegeben werden, oder solche Zusätze werden in das präpolymerisierte Harz nachträglich eingearbeitet. Beispiele für solche Additive sind oberflächenmodifizierende, z.B. die Oberflächenspannung senkende Mittel wie das fluorkohlenstoffmodifizierte Polymer EFKA-8300 von EFKA Additives BV, Niederlande.

Besonders überraschend konnte erfindungsgemäß festgestellt werden, dass der Zusatz von Füllstoffen zu den vorgeschlagenen Cyanatharzmassen eine höhere Zähigkeit der gehärteten Massen hervorruft, weshalb die Anbindung der erfindungsgemäßen Prepregs an die Kernwerkstoffe verbessert ist.

Zur Herstellung des für die Imprägnierung des textilen Fasermaterials vorgesehenen Prepolymerisats werden der oder die Cyanat-Bestandteile und der oder die multifunktionellen aromatischen Alkohole in geeigneten Mengenverhältnissen hinsichtlich der oben erwähnten Molverhältnisse von OCN zu OH in der Regel getrennt oder gemeinsam in einem geeigneten Lösungsmittel gelöst. Die Phenol-Komponente wird dementsprechend in der Regel in einem Verhältnis von 2 bis 20 Ma-% zugesetzt werden. Lösungsmittel für Cyanatester-Harze sind dem Fachmann bekannt; ein häufig eingesetztes ist Methylethylketon. Sofern die Lösungen getrennt bereitet werden, werden sie anschließend gut gemischt. Gegebenenfalls kann zur Beschleunigung der Vernetzung ein weiterer Katalysator zugesetzt werden, wie er aus dem Stand der Technik bekannt ist, beispielsweise ein Metall-Acetylacetonat-Komplex. Der oder die Füllstoff(e) kann/können einer der Lösungen oder der einzigen bzw. vereinten Lösung der Cyanat- und Alkoholkomponenten zu einem beliebigen Zeitpunkt zugesetzt werden. Die Dispergierung erfolgt in der Regel mit den hierfür üblichen Hilfsmitteln. Mit der Lösung bzw. Dispersion, die gegebenenfalls auf eine geeignete Viskosität eingeengt oder verdünnt wird, wird ein geeignetes textiles Flächenmaterial, zum Beispiel ein Gewebe, Vlies oder Gestrick aus Glasfaser oder einer mineralischen oder sonstigen anorganischen Faser, imprägniert, zum Beispiel mittels einer vertikalen Prepreganlage. Das imprägnierte Textilgebilde wird anschließend unter Temperatureinwirkung getrocknet, wobei das Lösungsmittel verdampft und das Harz prepolymerisiert wird. Die Dauer der Trocknung und damit der Prepolymerisationsgrad werden nach der jeweiligen Anforderung gewählt; er muss jedoch vor Erreichen des sogenannten Gelpunktes liegen, so dass ein erneutes Aufschmelzen und somit eine spätere Formgebung möglich ist. Als Temperaturbereich für die Trocknung eignet sich insbesondere derjenige zwischen 80 bis 200°C, ohne natürlich darauf beschränkt zu sein. Das so entstandene Halbzeug (Prepreg) wird vorzugsweise gekühlt (in der Regel bei etwa 0 bis -26°C, bevorzugt bei -26°C) gelagert. Zur Endverarbeitung (Verformung unter Temperatur und Druck) der Prepregs werden Temperaturen meist zwischen 100 und 200°C verwendet. Dabei sind Mindestpresszeiten von ca. 5 Minuten die Regel. Die Drücke sind der jeweiligen Verarbeitungstechnologie (z.B. Heißpressverfahren, Vakuumpress-Verfahren) bzw. dem gewünschten Produkt (Laminat, Kernverbundbauteil) anzupassen und liegen in der Regel bei etwa 1 bis 20 Bar (etwa 1 Bar typischerweise für einlagiges Laminat, etwa 12 Bar typischerweise für Crushed-Core, etwa 20 Bar typischerweise für mehrlagige Laminate,) ohne darauf beschränkt zu sein. Sandwich-Panels werden durch Heißpress-Verfahren aus dem Kernwerkstoff Honigwabe (Honeycomb) mit jeweils einer Prepregdecklage auf der Ober- und Unterseite ggf. unter Stauchung des Kerns hergestellt.

Nachstehend soll die Erfindung anhand von Beispielen näher erläutert werden.

Die darin genannten Produkte bezeichnen Verbindungen bzw. Materialien wie folgt:
Primaset ® PT 15 (zu beziehen von Lonza) ist ein Oligo(3-methylen-1,5-phenylcyanat)
Primaset ® PT 30 (ebenfalls zu beziehen von Lonza) ist ein Oligo(3-methylen-1,5-phenylcyanat) mit einer höheren Funktionalität als PT 15
Primaset ® LeCy (zu beziehen von Lonza) ist 4,4'-Ethylidendiphenyldicyanat

### Beispielgruppe 1 (nicht erfindungsgemäß)

Umsetzungen von Cyanat-Komponenten (sowohl mehrfunktionell als auch difunktionell) mit Bisphenolen, Herstellung von Prepregs daraus und deren Weiterverarbeitung zu Sandwich-Panels
Beispiel 1.1 Umsetzung von Primaset® PT15 (Lonza) oder von Primaset® PT30 (Lonza) mit Bishydroxyphenylsulfid
Beispiel 1.2 Umsetzung von Primaset® PT15 oder von Primaset® PT30 mit Bisphenol A
Beispiel 1.3 Umsetzung von Primaset® LeCy (Lonza) mit Bishydroxyphenylsulfid
Beispiel 1.4 Umsetzung von Primaset® LeCy mit Bisphenol A

Die Cyanat-Komponente sowie die Bisphenol-Komponente werden in Methylethylketon (MEK) gelöst. Typischerweise rechnet man dabei mit ca. 90-70%, vorzugsweise ca. 80 Ma-% Harz-Ausgangsmaterial und 10-30 Ma-%, vorzugsweise ca. 20 Ma-% MEK. Anschließend werden die Lösungen zusammengegeben und unter Rühren vermischt. Die Bisphenol-Komponente kann in einem Verhältnis von etwa 2-20 Ma-%, bezogen auf die Harz-Komponente, zugesetzt werden.

Mit dieser Lösung wird ein Glasfasergewebe imprägniert. Das imprägnierte Gewebe wird anschließend unter Temperatureinfluss, vorzugsweise bei ca. 80 bis 130°C, getrocknet, d.h. es wird das Lösungsmittel verdampft und das Harz prepolymerisiert. Die Dauer der Trocknung und damit der Prepolymerisationszustand liegen im Bereich von etwa 1 bis 10 Minuten, abhängig von der gewählten Temperatur (und konkreten Harzzusammensetzung), jedoch muss er vor Erreichen des sogenannten Gelpunktes liegen, sodass ein erneutes Aufschmelzen und somit eine Formgebung möglich ist. Die so entstandenen Halbzeuge (Prepregs) werden zur Lagerung einer Kühlung zugeführt. Zur Endverarbeitung (Verformung unter Temperatur und Druck) der Prepregs wurde eine Temperatur von 160°C bei einer Presszeit von 800s verwendet. Das Produkt, ein Sandwich-Panel, wurde durch Heißpress-Verfahren aus dem Kernwerkstoff Honigwabe (Honeycomb) mit jeweils einer Prepregdecklage auf der Ober- und Unterseite unter Stauchung des Kerns hergestellt.

### Beispielgruppe 2 (nicht erfindungsgemäß)

Herstellung von Cyanat-Ester-Harzen aus Kombinationen von Cyanat-Komponenten mit Bisphenolen, Herstellung von Prepregs daraus und deren Weiterverarbeitung zu Sandwich-Panels
Beispiel 2.1
Umsetzung von Mischungen von Primaset® PT15 und Primaset® PT30 mit Bishydroxyphenylsulfid
Beispiel 2.2
Umsetzung von Mischungen von Primaset® PT15 und Primaset® PT30 mit Bisphenol A
Beispiel 2.3
Umsetzungen von Mischungen von Primaset® PT15 und Primaset® LeCy mit Bishydroxyphenylsulfid
Beispiel 2.4
Umsetzung von Mischungen von Primaset® PT15 und Primaset® LeCy mit Bisphenol A
Beispiel 2.5
Umsetzungen von Mischungen von Primaset® PT30 und Primaset® LeCy mit Bishydroxyphenylsulfid
Beispiel 2.6
Umsetzung von Mischungen von Primaset® PT30 und Primaset® LeCy mit Bisphenol A

Das Vorgehen der Verarbeitung entspricht der unter 1 beschriebenen Arbeitsweise. Die Cyanat-Komponenten werden separat gelöst und anschließend mit der Bisphenol-Lösung vereinigt. Die Massenanteile entsprechen den unter 1 beschriebenen. Die Verhältnisse der Cyanat-Komponenten zueinander können im sich ergebenden restlichen Bereich über die gesamte Bandbreite gewählt werden.

### Beispielgruppe 3 (erfindungsgemäß)

Einarbeitung von Hilfsstoffen zum Erzielen verbesserter Oberflächen im gehärteten Zustand sowie hoher Trommelschälwerte, ohne Verlust an Brandfestigkeit für die Harzmischungen der Beispielgruppen 1 und 2
Beispiel 3.1 Einarbeitung von Aerosil®
Beispiel 3.2 Einarbeitung von Nanofil®
Beispiel 3.3 Einarbeitung von Exolit OP 930
Beispiel 3.4 Einarbeitung von Kombinationen aus den Beispielen 3.1 bis 3.3

Die Einarbeitung der Hilfsstoffe erfolgt in die vereinigten Lösungen, die wie unter 1 und 2 beschrieben hergestellt wurden, unter Verwendung von Dispergiergeräten. Der zugegebene Anteil der Hilfsstoffe kann vorzugsweise in der Summe bis zu 20 Ma-% betragen, bei Zusatz eines einzigen Füllstoffs liegt er vorzugsweise bei maximal ca. 10 Ma-%.

### Beispielgruppe 4 (erfindungsgemäß)

### Beispiel 4.1 Einarbeitung von Hilfsstoffen zum Erzielen einer besonders glatten Oberfläche

65g Primaset® PT15 (Lonza), 25g Primaset® (Lonza) und 10g Bisphenol A werden in einem Kolben eingewogen und bei 120 aufgeschmolzen. Die Schmelze wird anschließend unter Vakuum entgast. In die entgaste Mischung wird portionsweise 2 Teile Aerosil (Degussa) und/oder 2,5 Teile Nanofil 2 (Südchemie) und/oder 10Teile SLM P52 (Wacker) und/oder 8,8Teile Exolit OP 930 zugegeben und unter Verwendung eines Dipergier-Rührers in die Mischung eingearbeitet. Die Mischung wird anschließend in eine auf 140°C vorgeheizte Gießform gegeben und nach folgendem Regime ausgehärtet: 6h bei 140°C, 1 h bei 250°C. Das resultierende Polymer ist gelblich, undurchsichtig, weist eine Glastemperatur von 217°C auf und lässt sich auf eine gemittelte Rauhtiefe von Rz=0,033 µm polieren.

### Beispiel 4.2 Einarbeitung von Core-Shell-Partikeln SLM P52 zum Erzielen hoher Trommelschälwerte, ohne Verlust an Brandfestigkeit der Harzmischungen der Beispielgruppen 1, 2 oder 3

Die Einarbeitung der Partikel erfolgt in die vereinigten Lösungen, die wie unter 1, 2, und 3 beschrieben hergestellt wurden, unter Verwendung von Dispergiergeräten. Der zugegebene Anteil der Hilfsstoffe kann vorzugsweise in der Summe bis zu 20 Ma-% betragen; wenn weitere Hilfsstoffe vorhanden sind (Beispielgruppe 3), können es sogar bis ca. 30 Ma-% sein.

Die nachstehende Tabelle zeigt einige Ergebnisse für die Sandwichstrukturen, hergestellt mit Prepregs aus den voranstehenden Beispielen. Die Oberflächenqualität aller Sandwichstrukturen war sowohl nach optischen als auch nach haptischen Bewertungskriterien hervorragend.

| **Matrix** | **Verhältnis [Ma%]** | **Zuschlagstoffe** | **Teile [Ma%]** | **Cone-Kalorimetrie¹ [kW/m²]** | **OSU-Kammer² [kW/m²]** | **Lagerstabi li-tät bei RT** | **Trommel-schältest DIN EN 2243 [N]** | **Beispiel -gruppe** |
|---|---|---|---|---|---|---|---|---|
| PT30/LeCy/BHPSd | 65/25/10 | Nanofil 2/Exolit OP930/EFKA 8300 | 5/8,8/2 | 129 (Sandwich) | 37 (Sandwich) | > 8 Tage | 141 | 2.5 ; 3.2; 3.3 |
| PT30/LeCy/BHPSd | 65/25/10 | Aerosil R202/Nanofil 2/ Exolit OP930/EFKA 8300 | 2/2,5/8,8/2 | 195 (Sandwich) | - | > 8 Tage | 87 | 2.5; 3.1; 3.2; 3.3 |
| PT3O/LeCy/Bisphen ol A | 65/25/10 | Aerosil R202/Nanofil 2/ Exolit OP930/EFKA 8300 | 2/2,5/8,8/2 | 154 (Sandwich) | 50 (Sandwich + Dekor) | > 14 Tage | 110 | 2.6 ; 3.1; 3.2; 3.3 |
| PT30/LeCy/Bisphen ol A | 63,75/23,75/ 12,5 | Aerosil R202/Nanofil 2/ Exolit OP930/EFKA 8300 | 2/2,5/8,8/2 | 188 (Sandwich) | 52 (Sandwich + Dekor) | > 14 Tage | 106 | 2.6; 3.1; 3.2; 3.3 |
| PT15/LeCy/BHPSd | 50/40/10 | Nanofil 2/Aerosil R202/SLM P52 | 2,5/2/10 | 198 (Laminat 1 lagig) | 64 (Laminat 1 lagig) | > 8 Tage | 152 | 2.3; 3.1; 3.2; 4.1 |
| PT15/LeCy/ Bisphenol A | 50/40/10 | Nanofil 2/Aerosil R202/SLM P52 | 2,5/2/10 | 229 (Laminat 1 lagig) | 59 (Laminat 1 lagig) | > 14 Tage | 95 | 2.4; 3.1; 3.2; 4.1 |
| PT15/LeCy/ Bisphenol A | 65/25/10 | Nanofil 2/Aerosil R202/SLM P52/ Exolit OP 930/EFKA 8300 | 2,5/2/10/8,8/ 2 | 165 (Sandwich) | - | > 14 Tage | 75 | 2.4; 3.1; 3.2; 3.3; 4.1 |
| PT15/LeCy/ Bisphenol A | 65/25/10 | Nanofil 2/Aerosil R202/ Exolit OP 930/EFKA 8300 | 2,5/2/8,8/2 | 180 (Sandwich) | - | > 14 Tage | - | 2.4; 3.1; 3.2; 3.3 |

| | | | | | | | | |
|---|---|---|---|---|---|---|---|---|
| ¹ Heat Release Peak; Heat Flux 50 kW/m² ² Heat Release Peak; Heat Flux 35 kW/m² | | | | | | | | |

## Patentansprüche

1. Textiles Flächengebilde, das mit einer Mischung aus mindestens den folgenden Bestandteilen imprägniert ist:
- einem Prepolymer, hergestellt unter Verwendung mindestens eines di- oder polyfunktionellen organischen Cyanats und mindestens eines di- oder polyfunktionellen aromatischen Alkohols in Mengenanteilen, die ein molares Verhältnis der OCN-Gruppen zu OH-Gruppen in den Ausgangsmaterialien zur Herstellung des Prepolymeren zwischen 95:5 und 70:30 gewährleisten, wobei das Prepolymer einen Vernetzungsgrad aufweist, der unterhalb seines Gelpunktes liegt,
und
- mindestens einem Füllstoff,
wobei das imprägnierte Flächengebilde frei von Epoxidharz ist, und worin das oder die di- oder polyfunktionelle(n) organische(n) Cyanat(e) ausgewählt ist/sind unter Cyanaten der Formeln I bis III: 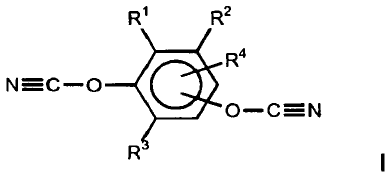 worin R¹ bis R⁴ unabhängig voneinander Wasserstoff, C₁-C₁₀-Alkyl, C₃-C₈-Cycloalkyl, C₁-C₁₀-Alkoxy, Phenyl oder Phenoxy ist, 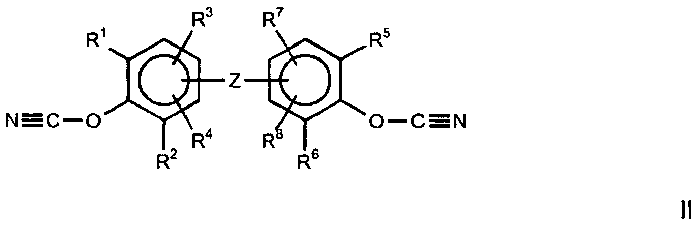 worin R⁵ bis R³ wie R¹ bis R⁴ sind und Z eine chemische Bindung, SO₂, CH₂, CH(CH₃), Isopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 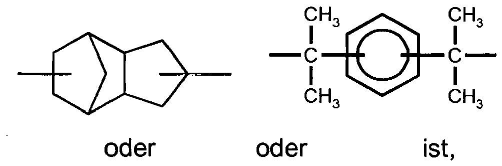 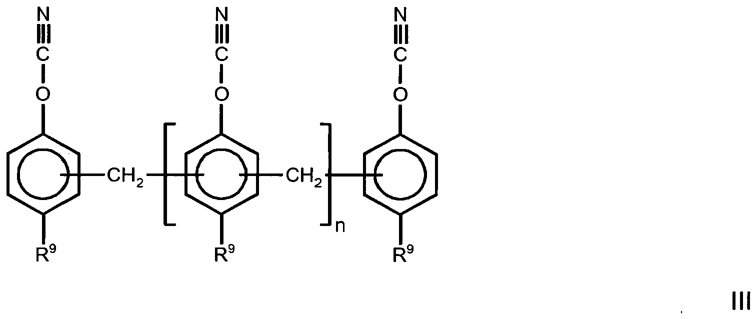 worin R⁹ Wasserstoff oder C₁-C₁₀-Alkyl ist und n einen Wert von 0 bis 20 darstellt, sowie unter Mischungen sowie unter Prepolymeren der vorgenannten Cyanate,
und worin der oder die di- oder polyfunktionelle(n) aromatische(n) Alkohol(e) ausgewählt ist/sind unter polyfunktionellen Phenolen mit Strukturen, die den für die Cyanate angegebenen Strukturen I bis III entsprechen, wobei die Cyanatgruppen durch Hydroxygruppen ersetzt sind.

2. Textiles Flächengebilde nach Anspruch 1, **dadurch gekennzeichnet, dass** das di- oder polyfunktionelle organische Cyanat oder eines dieser Cyanate ausgewählt ist unter Novolak-Cyanaten, dem Bisphenol A-Dicyanatderivat, 4,4'Ethylidendiphenyldicyanat und Verbindungen mit der Formel III gemäß Anspruch 2, worin n 1, 2 oder 3 ist, R⁹ Wasserstoff ist und die Methylengruppe jeweils in ortho-Position zur Cyanatgruppe steht und/oder dass der di- oder polyfunktionelle aromatische Alkohol oder einer dieser Alkohole ausgewählt ist unter Bisphenol A und Bishydroxyphenylsulfid.

3. Textiles Flächengebilde nach einem der voranstehenden Ansprüche, **dadurch gekennzeichnet, dass** das Prepolymer ausschließlich oder im Wesentlichen ausschließlich unter Verwendung der im Anspruch 1 genannten Ausgangsmaterialien hergestellt ist.

4. Textiles Flächengebilde nach einem der voranstehenden Ansprüche, worin der oder mindestens einer der Füllstoffe ausgewählt ist unter Mikrofillern und/oder Nanofillern aus anorganischem, gegebenenfalls organisch modifiziertem und/oder beschichtetem Material.

5. Textiles Flächengebilde nach einem der voranstehenden Ansprüche, worin der oder mindestens einer der Füllstoffe phosphororganische Bestandteile enthält.

6. Textiles Flächengebilde nach einem der Ansprüche 4 oder 5, worin der oder mindestens einer der Füllstoffe ausgewählt ist unter Siliciumdioxid, keramischen Materialien, organisch modifizierten Silikonen oder Siloxanen oder Mischungen hiervon, insbesondere solchen mit sehr hohen Oberflächen und/oder kleinen Korngrößen.

7. Textiles Flächengebilde nach einem der Ansprüche 4 bis 6, worin der oder mindestens einer der Füllstoffe ausgewählt ist unter Core-Shell-Partikeln.

8. Textiles Flächengebilde nach einem der Ansprüche 4 bis 7, umfassend mindestens zwei verschiedene Füllstoff-Materialien und/oder -Größen.

9. Textiles Flächengebilde nach einem der Ansprüche 4 bis 8, worin der Füllstoffanteil der Mischung bis zu 30 Masse-%, vorzugsweise bis zu 20 Masse-% und stärker bevorzugt bis zu 15 Masse-% beträgt.

10. Textiles Flächengebilde nach einem der voranstehenden Ansprüche, worin die Mischung mindestens einen weiteren Zusatz aufweist.

11. Textiles Flächengebilde nach Anspruch 10, worin der Zusatz ausgewählt ist unter oberflächenmodifizierenden, vorzugsweise die Oberflächenspannung senkenden Mittel.

12. Textiles Flächengebilde nach einem der voranstehenden Ansprüche, **dadurch gekennzeichnet, dass** das Gebilde ein Gewebe, Gestrick oder Gelege aus einem unbrennbaren Fasermaterial, vorzugsweise aus Glasfaser, ist.

13. Verfahren zum Herstellen eines textilen Flächengebildes wie in einem der Ansprüche 1 bis 12 beansprucht, **gekennzeichnet durch** die folgenden Schritte:
- getrenntes oder gemeinsames Lösen des mindestens einen di- oder polyfunktionellen organischen Cyanats wie in Anspruch 1 definiert und des mindestens einen di- oder polyfunktionellen aromatischen Alkohols wie in Anspruch 1 definiert in Mengenanteilen, die ein molares Verhältnis der OCN-Gruppen zu OH-Gruppen der genannten Materialien zwischen 95:5 und 70:30 gewährleisten, in einem oder in verschiedenen Lösungsmitteln und, sofern das Lösen in getrennten Lösungsmitteln erfolgt, anschließendes Zusammengeben der Lösungen,
- Einarbeiten mindestens eines Füllstoffs in eine, in die (einzige) oder in die vereinigten Lösung(en),
- ggf. Einstellen der Viskosität der so erhaltenen Mischung **durch** Abdampfen oder Zugeben von Lösungsmittel,
- Imprägnieren eines textilen Flächengebildes mit der Mischung,
und
- Trocknen des imprägnierten textilen Flächengebildes unter Ausbildung des Prepolymers.

14. Verfahren nach Anspruch 13, worin das Trocknen unter Zufuhr von Wärme erfolgt.

15. Verfahren nach Anspruch 13 oder 14, worin das Trocknen zwischen 80 und 200°C erfolgt.

16. Verwendung eines textilen Flächengebildes nach einem der Ansprüche 1 bis 12 in einem Verbundbauteil oder einem monolithischen Bauteil oder zur Herstellung eines Verbundbauteils oder eines monolithischen Bauteils.

17. Verwendung nach Anspruch 16, wobei das Verbundbauteil ein Wabenkernverbund-Sandwichbauteil oder ein zwei- oder mehrlagiges Laminat ist.

18. Verwendung nach Anspruch 17, worin der Wabenkern beidseitig mit einem textilen Flächengebilde nach einem der Ansprüche 1 bis 12 verbunden ist.

19. Verwendung nach Anspruch 16 oder 17, wobei das textile Flächengebilde mit einem geeigneten Substrat bei etwa 100-200°C für etwa 3-7 Minuten bei etwa 1 bis 20 Bar verpresst wird, um das Verbundbauteil zu erhalten.

20. Verwendung nach Anspruch 19, wobei das textile Flächengebilde mit Hilfe von Heißpressverfahren oder Vakuumpressverfahren mit dem Substrat verbunden ist.

21. Verwendung nach Anspruch 19 oder 20, worin das Substrat Wabenstrukturen aufweist.

22. Verwendung nach Anspruch 21, wobei das Verpressen eine Deformierung der Waben gemäß dem Crushed-Core-Verfahren beinhaltet.

23. Verwendung nach Anspruch 16, worin das monolithische Bauteil ein Klimarohr ist.

## Claims

1. A textile web material impregnated with a mixture comprising at least the following components:
- a prepolymer prepared using at least one bi- or polyfunctional organic cyanate and at least one bi- or polyfunctional aromatic alcohol in constituent amounts ensuring a molar ratio of the OCN groups to the OH groups in the starting materials for the preparation of the prepolymer between 95:5 and 70:30, wherein the prepolymer has a degree of crosslinking which is below its gel point,
and
- at least one filler,
wherein the impregnated textile web material is free of epoxide resins, and wherein the bi- or polyfunctional organic cyanate(s) is/are selected from cyanates of the structural formula I to III: 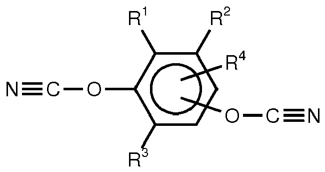 wherein R¹ to R⁴ are, independent from one another, hydrogen, C₁-C₁₀ alkyl, C₃-C₈ cycloalkyl, C₁-C₁₀ alkoxy, phenyl or phenoxy; 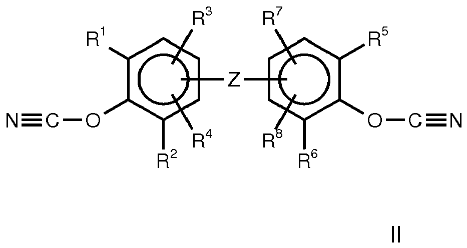 wherein R⁵ to R⁸ are the same as R¹ to R⁴ and Z is a chemical bond, SO₂, CH₂, CH(CH₃), isopropylene, C₁-C₁₀ alkylene, O, NR⁹, N=N, CH=CH, COO, CH=N, CH=N-N=CH, alkylene oxyalkylene with C₁-C₈ alkylene, S, Si(CH₃)₂, 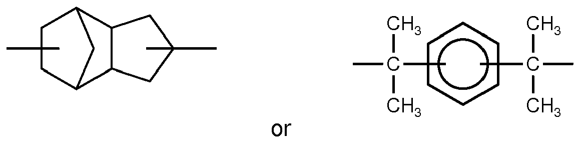 or 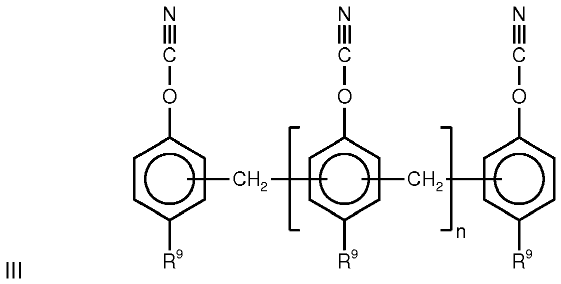 wherein R⁹ is hydrogen or C₁-C₁₀ alkyl and n is an integer of 0 to 20, as well as from mixtures and prepolymers of said cyanates,
and wherein the said bi- or polyfunctional aromatic alcohol(s) is/are selected under polyfunctional phenols having structures corresponding to the structures I to III indicated for the cyanates, wherein the cyanate groups are replaced with OH groups.

2. Textile web material according to claim 1, **characterized in that** the bi- or polyfunctional organic cyanate or one of these cyanates is selected under novolak cyanates, the bicyanate derivate of bisphenol A, 4,4'ethylidenediphenyldicyanate and compounds of formula (III) according to claim 2, wherein n is 1, 2, or 3, R⁹ is hydrogen and each of the methylene groups is in ortho position relative to the cyanate group, and/or that the bi- or polyfunctional aromatic alcohol or one of these alcohols is selected under bisphenol A and bis(hydroxyphenyl) sulfide.

3. Textile web material according to any of the preceding claims, **characterized in that** the prepolymer is manufactured exclusively or substantially exclusively using the starting materials mentioned in claim 1.

4. Textile web material according to any of the preceding claims, wherein the or at least one of the fillers is selected from microfillers and/or nanofillers made of inorganic, optionally organically modified and/or coated material.

5. Textile web material according to any of the preceding claims, wherein the or at least one of the fillers comprises organophosphorus components.

6. Textile web material according to any of claims 4 or 5, wherein the or at least one of the fillers is selected under silicon dioxide, ceramic materials, organically modified silicones, siloxanes, and mixtures thereof, especially such having very high surfaces and/or small particle sizes.

7. Textile web material according to any of claims 4 to 6, wherein the or at least one of the fillers is selected under core-shell particles.

8. Textile web material according to any of claims 4 to 7, comprising at least two different filler materials and/or filler sizes.

9. Textile web material according to any of claims 4 to 8, wherein the amount of filler in the mixture is up to 30% by weight, preferably up to 20% by weight and more preferably up to 15% by weight.

10. Textile web material according to any of the preceding claims, wherein the mixture comprises at least one more additive.

11. Textile web material according to claim 10, wherein the additive is selected under surface-modifying, preferably the surface tension reducing agents.

12. Textile web material according any of the preceding claims, **characterized in that** the textile web material is a woven fabric or a knitted fabric or a nonwoven fabric comprised of a fire-proof fiber material, preferably of fiber glass.

13. Method for producing a textile web material according to any of claims 1 to 12, **characterized by** the following steps:
- dissolving the at least one bi- or polyfunctional organic cyanate as defined in claim 1 and the at least one bi- or polyfunctional aromatic alcohol as defined in claim 1, separately or together, in constituent amounts ensuring a molar ratio of the OCN groups to the OH groups of the said materials between 95:5 and 70:30, in one or in different solvents and, if dissolving takes place in different solvents, subsequent combining of the solutions,
- incorporating at least one filler in one, in the (only one) or in the combined solution(s),
- optionally adjusting the viscosity of the mixture thus obtained by evaporation or addition of solvent,
- impregnating a textile web with the mixture, and
- drying the impregnated textile web under formation of the prepolymer.

14. Method according to claim 13, wherein the drying is carried out under application of heat.

15. Method according to claims 13 or 14, wherein the drying is carried out between 80 and 200 °C.

16. Use of a textile web material according to any of claims 1 to 12 in a composite component or in a monolithic component, or for the preparation of a composite component or of a monolithic component.

17. Use according to claim 16, wherein the composite component is a honeycomb sandwich composite having a core, or is a two-layer laminate or multi-layer laminate.

18. Use according to claim 17, wherein the honeycomb core is connected to a textile web material according to any of claims 1 to 12, on both sides.

19. Use according to claim 16 or 17, wherein the textile web material is compression-molded to a suitable substrate at about 100-200°C for approximately 3-7 minutes at approximately 1-20 bar in order to produce the composite compound.

20. Use according to claim 19, wherein the textile web material and the substrate are bonded to one another by hot pressing or vacuum pressing.

21. Use according to claim 19 or 20, wherein the substrate comprises honeycomb structures.

22. Use according to claim 21, wherein the pressing includes a deformation of the honey combs in accordance with the crushed-core method.

23. Use according to claim 16, wherein the monolithic component is a pipe for air-conditioning.

## Revendications

1. Article textile plat, qui est imprégné avec un mélange composé au moins des composants suivants:
- un prépolymère, fabriqué par utilisation d'au moins un cyanate organique di- ou polyfonctionnel et d'au moins un alcool aromatique di- ou polyfonctionnel en des proportions massiques qui garantissent un rapport molaire des groupes OCN- aux groupes OH- dans les matières premières destinées à la fabrication du prépolymère compris entre 95:5 et 70:30, le prépolymère présentant un taux de réticulation qui est situé en dessous de son point de gélification,
et
- au moins une matière de charge,
dans lequel l'article plat imprégné est libre de résine époxy, et dans lequel le ou les cyanate(s) organique(s) di- ou polyfonctionnel(s) est/sont sélectionné(s) parmi les cyanates des formules I à III: 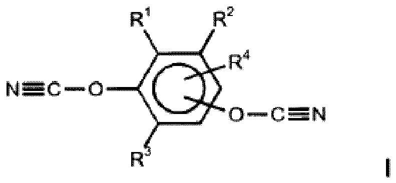 dans laquelle R¹ à R⁴ sont, indépendamment l'un de l'autre, un hydrogène, un alkyle C₁-C₁₀, un cycloalkyle C₃-C₈, un alcoxy C₁-C₁₀, un phényle ou un phénoxy, 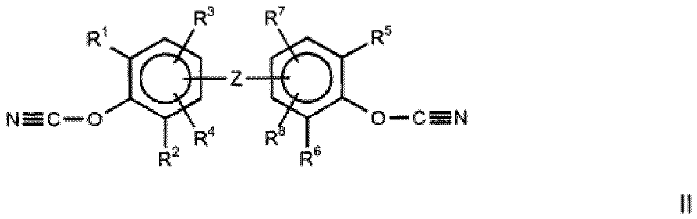 dans laquelle R⁵ à R⁸ sont comme R¹ à R⁴ et Z est une liaison chimique, SO₂, CH₂, CH(CH₃), isopropylène, alkylène C₁-C₁₀, 0, NR⁹, N=N, CH=CH, COO, CH=N, CH=N-N=CH, alkylène-oxy-alkylène avec alkylène C₁-C₈, S, Si(CH₃)₂, 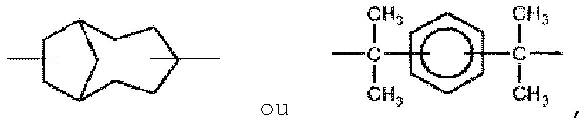 ou 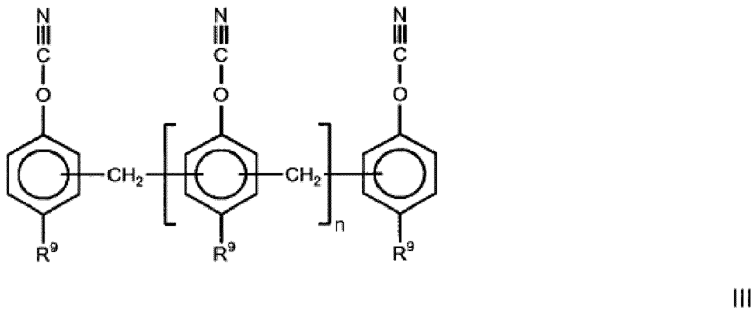 dans laquelle R⁹ est un hydrogène ou un alkyle C₁-C₁₀ et n représente une valeur de 0 à 20, ainsi que parmi des mélanges ou parmi des prépolymères des cyanates précités,
et dans lequel le ou les alcool(s) aromatique(s) di- ou polyfonctionnel(s) est/sont sélectionné(s) parmi des phénols polyfonctionnels présentant des structures, qui correspondent aux structures I à III indiquées pour les cyanates, les groupes cyanate étant remplacés par des groupes hydroxy.

2. Article textile plat selon la revendication 1, **caractérisé en ce que** le cyanate organique di- ou polyfonctionnel ou un de ces cyanates est sélectionné parmi les cyanates Novolak, le dérivé dicyanate du bisphénol A, le 4,4'éthylidènediphényldicyanate et des composés de la formule III selon la revendication 2, dans laquelle n est 1, 2 ou 3, R⁹ est un hydrogène et le groupe méthylène est chaque fois placé en position ortho par rapport au groupe cyanate et/ou **en ce que** l'alcool aromatique di- ou polyfonctionnel ou un de ces alcools est sélectionné parmi le bisphénol A et le sulfure de bishydroxyphényle.

3. Article textile plat selon l'une quelconque des revendications précédentes, dans lequel le prépolymère est fabriqué exclusivement ou essentiellement exclusivement par utilisation des matières premières mentionnées dans la revendication 1.

4. Article textile plat selon l'une quelconque des revendications précédentes, dans lequel la ou au moins une des matières de charge est sélectionnée parmi des microcharges et/ou des nanocharges en une matière inorganique, éventuellement modifiée et/ou revêtue organiquement.

5. Article textile plat selon l'une quelconque des revendications précédentes, dans lequel la ou au moins une des matières de charge contient des composants organo-phosphorés.

6. Article textile plat selon l'une quelconque des revendications 4 ou 5, dans lequel la ou au moins une des matières de charge est sélectionnée parmi le dioxyde de silicium, les matériaux céramiques, les silicones ou les siloxanes organiquement modifiés ou des mélanges de ceux-ci, en particulier ceux qui présentent une très grande surface et/ou de petites tailles de grains.

7. Article textile plat selon l'une quelconque des revendications 4 à 6, dans lequel la ou au moins une des matières de charge est sélectionnée parmi des particules Core-Shell.

8. Article textile plat selon l'une quelconque des revendications 4 à 7, contenant au moins deux matières et/ou tailles différentes de matière de charge.

9. Article textile plat selon l'une quelconque des revendications 4 à 8, dans lequel la proportion de matière de charge du mélange vaut jusqu'à 30 % en masse, de préférence jusqu'à 20 % en masse, et de préférence encore jusqu'à 15 % en masse.

10. Article textile plat selon l'une quelconque des revendications précédentes, dans lequel le mélange présente au moins un autre additif.

11. Article textile plat selon la revendication 10, dans lequel l'additif est sélectionné parmi des moyens modifiant la surface, de préférence abaissant la tension superficielle.

12. Article textile plat selon l'une quelconque des revendications précédentes, **caractérisé en ce que** l'article est un tissu, un tricot ou un non-tissé en un matériau fibreux incombustible, de préférence en fibre de verre.

13. Procédé de fabrication d'un article textile plat tel qu'il est revendiqué dans une quelconque des revendications 1 à 12, **caractérisé par** les opérations suivantes:
- dissoudre séparément ou ensemble ledit au moins un cyanate organique di- ou polyfonctionnel défini dans la revendication 1 et ledit au moins un alcool aromatique di- ou polyfonctionnel défini dans la revendication 1 en des proportions massiques qui garantissent un rapport molaire des groupes OCN- aux groupes OH- des matières précitées compris entre 95:5 et 70:30, dans un ou dans des solvant(s) différents et, dans la mesure où la dissolution est effectuée dans des solvants séparés, réunir ensuite les solutions,
- incorporer au moins une matière de charge dans une solution, dans la solution (unique) ou dans les solutions réunies,
- éventuellement régler la viscosité du mélange ainsi obtenu par évaporation ou ajout de solvant,
- imprégner un article textile plat avec le mélange, et
- sécher l'article textile plat imprégné avec formation du prépolymère.

14. Procédé selon la revendication 13, dans lequel on effectue le séchage par apport de chaleur.

15. Procédé selon la revendication 13 ou 14, dans lequel on effectue le séchage entre 80 et 200°C.

16. Utilisation d'un article textile plat selon l'une quelconque des revendications 1 à 12 dans un élément composite ou un élément monolithique ou pour la fabrication d'un élément composite ou d'un élément monolithique.

17. Utilisation selon la revendication 16, dans laquelle l'élément composite est une structure sandwich à coeur en nid d'abeilles ou un stratifié à deux ou plusieurs couches.

18. Utilisation selon la revendication 17, dans laquelle le coeur en nid d'abeilles est assemblé sur les deux côtés à un article textile plat selon l'une quelconque des revendications 1 à 12.

19. Utilisation selon la revendication 16 ou 17, dans laquelle l'article textile plat est pressé avec un substrat approprié à environ 100-200°C pendant environ 3-7 minutes sous environ 1 à 20 bar, afin d'obtenir l'élément composite.

20. Utilisation selon la revendication 19, dans laquelle l'article textile plat est assemblé au substrat à l'aide d'un procédé de pressage à chaud ou d'un procédé de pressage sous vide.

21. Utilisation selon la revendication 19 ou 20, dans laquelle le substrat présente des structures en nid d'abeilles.

22. Utilisation selon la revendication 21, dans laquelle le pressage comporte une déformation du nid d'abeilles selon le procédé Crushed Core.

23. Utilisation selon la revendication 16, dans laquelle l'élément monolithique est un tube de climatisation.
